# EUROPEAN PATENT APPLICATION

(11) **EP 4 166 484 A1**
(43) Date of publication of application: **19.04.2023**
(21) Application number: 21382927.8
(22) Date of filing: 15.10.2021
(51) Int. Cl.: B65G 23/44

(54) **CHAIN CONVEYOR AND METHOD FOR SWITCHING A CHAIN CONVEYOR BETWEEN A TENSIONED STATE AND A CLEANING STATE**

(71) Applicant: MULTIVAC Sepp Haggenmüller SE & Co. KG, 87787 Wolfertschwenden (DE)
(72) Inventor: Colomer, Carles, 17300 Blanes (ES); Ortega Sanchez, Ismael, 08360 Barcelona (ES); Maltas, Gerard, 08006 Barcelona (ES)
(74) Representative: Grünecker Patent- und Rechtsanwälte PartG mbB

(57) **Abstract**

A chain conveyor comprising a chain arranged as endless conveyor on two deflection rollers and a guide for guiding the chain between the deflection rollers, wherein the chain conveyor further comprises a tensioning element for tensioning the chain, wherein the tensioning element is configured to move one of the two deflection rollers to thereby tension the chain, wherein the chain conveyor further comprises a lifting element for lifting the chain from the guide, wherein the lifting element is movably coupled with the tensioning element so that the lifting element can lift the chain when the tensioning element is moved so as to reduce the tension of the chain.

## Description

The present disclosure relates to a chain conveyor comprising a chain according to claim 1 and a method for switching a chain of a chain conveyor between a tensioned state and a cleaning state according to claim 9.

### Prior art

Chain conveyors have been known for several decades. The chain conveyors usually comprise a chain that is tensioned on two deflection rollers, one on each end of an endless conveyor formed from the chain. The chain may further comprise engaging elements for engaging with products that are to be transported with the chain conveyor or may comprise a surface on which products can be transported.

Particularly in the technical field of food production, cleaning of transporting devices, like chain conveyors is a crucial issue, as reliable disinfection and removal of dirt is necessary to ensure production of food at high quality.

This usually requires that the chain or parts of the chain are cleaned at specific intervals or in case a failure occurs that results in the chain or parts of the chain being contaminated. As the chain is tensioned in order to ensure reliable transport of the products when in use, cleaning of the chain or parts of the chain can be difficult and time consuming, as it requires removal of the chain from the deflection rollers, resulting in significant downtimes of the chain conveyor when cleaning is required.

### Object

In view of the above, one object addressed by the present disclosure is to ensure reliable cleaning for a chain conveyor at reduced downtimes and simplified interaction of a user with the chain conveyor.

### Solution

The above object is addressed with the chain conveyor according to claim 1 and the method for switching a chain of a chain conveyor between a tensioned state and a cleaning state according to claim 9. Further preferred embodiments are provided in the dependent claims.

According to the invention, a chain conveyor comprising a chain arranged as endless conveyor on two deflection rollers and a guide for guiding the chain between the deflection rollers is provided, wherein the chain conveyor further comprises a tensioning element for tensioning the chain, wherein the tensioning element is configured to move one of the two deflection rollers to thereby tension the chain, wherein the chain conveyor further comprises a lifting element for lifting the chain from the guide, wherein the lifting element is movably coupled with the tensioning element so that the lifting element can lift the chain when the tensioning element is moved so as to reduce the tension of the chain.

The movable coupling of the lifting element with the tensioning element is to be understood as meaning that the lifting element is moved automatically when the tensioning element is moved. Hence, a coupling is provided between the movement of the tensioning element and the lifting element that results in the lifting element following a prescribed movement once the tensioning element is moved.

The movement of the tensioning element and the movement of the lifting element are not restricted with respect to the respective direction of movement. However, the movement of the tensioning element is intended to be such that it can be moved between a first state in which the chain is tensioned and a second state in which the tension of the chain is less than in the first state, thereby allowing the lifting element to lift the chain.

Furthermore, the reduction of the tension when moving the tensioning element is to be understood as meaning that the reduction in applied tension to the chain is only obtained in view of the tension applied to the chain by the tensioning element or the deflection rollers or the deflection roller moved by the tensioning element. Thus, also cases are encompassed where the combined movement of the tensioning element and the lifting element results in the tension to the chain not being reduced in total, as long as the tension caused by the movement of the tensioning element changes when moving the tensioning element.

Particularly, the tensioning element can be provided so as to change the relative distance between the deflection rollers, thereby increasing the tension applied to the chain by the deflection rollers when the tensioning element is moved so as to increase the distance of the deflection rollers. Likewise, the tension applied to the chain is reduced when the distance of the deflection rollers is reduced by the tensioning element.

With this chain conveyor, means for moving the chain between a tensioned state, where the chain can be used to transport products, and a cleaning state, where the tension of the chain is reduced and it can be lifted from the guide, thereby facilitating easier cleaning, are provided in a manner that can be applied by a user in an easier fashion as only the actuation of the tensioning element is required for changing the state of the conveyor.

In one embodiment, the tensioning element is configured to move the deflection roller between a tensioned state of the chain and a cleaning state of the chain, wherein, in the cleaning state, the distance of the chain to the guide is larger than in the tensioned state.

Particularly, moving the deflection roller can mean increasing the distance between the deflection rollers so as to increase the tension of the chain and decreasing the distance of the deflection rollers so as to decrease the tension of the chain.

In one embodiment, the movement of the at least one deflection roller using the tensioning element is performed within the plane defined by the chain. Thereby, the tension of the deflection rollers is preferably only applied in a direction along the chain and not in a plane perpendicular to that direction. This can reduce internal stress and tension within the chain in directions that are not intended.

In a further embodiment, the lifting element is connected to the tensioning element by a rigid connector.

This embodiment ensures that the movement of the deflection roller or the movement of the tensioning element as such is (directly) transferred or translated into a movement of the lifting element, ensuring reliable lifting of the chain when the tension of the chain is reduced.

It can further be provided that the rigid connector comprises a catch engaged with an intrusion of the lifting element.

This realization of the connection between the lifting element and the tensioning element is constructionally simple but highly reliable.

In a further embodiment, the tensioning element is configured to move the deflection roller in a direction parallel to the conveying direction of the chain conveyer so as to adjust a tension of the chain and/or wherein the lifting element is configured to rotate about an axis of rotation.

With this rotation of the lifting element, a translation of the otherwise translational movement of the tensioning element into a combination of a translational movement of the lifting element together with a translational movement perpendicular to the movement direction of the tensioning element is provided, ensuring reliable lifting of the chain.

It can also be provided that the tensioning element comprises a spindle and an actuation element for actuating the spindle.

This embodiment provides reliable movement of the deflection roller by the tensioning element.

The chain conveyor can further comprise a plurality of lifting elements movably coupled with the tensioning element.

Providing a plurality of lifting elements aids in lifting the whole chain or substantial parts of the chain (for example more than 50% of the length of the chain between the deflection rollers), thereby making maintenance of the chain over its whole length easier.

In a more specific realization of this embodiment, the lifting elements are positioned equidistantly between the two deflection elements.

With this, a defined lifting of all parts of the chain is ensured irrespective of the distance of the respective part to a particular deflection roller, for example.

The present disclosure further pertains to a method for switching a chain of a chain conveyor between a tensioned state and a cleaning state, wherein the chain conveyor comprises the chain arranged as endless conveyor on two deflection rollers and a guide for guiding the chain between the deflection rollers, wherein the chain conveyor further comprises a tensioning element for tensioning the chain, wherein the tensioning element is configured to move one of the two deflection rollers to thereby tension the chain, wherein the chain conveyor further comprises a lifting element for lifting the chain from the guide, wherein the lifting element is movably coupled with the tensioning element so that the lifting element lifts the chain when the tensioning element is moved so as to reduce the tension of the chain, the method comprising actuating the tensioning element to move the deflection roller between a tensioned state of the chain and a cleaning state of the chain.

This method provides for reliable cleaning for the chain conveyor by reducing the time required for that cleaning.

In one embodiment, in the cleaning state, the distance of the chain to the guide is larger than in the tensioned state.

This ensures that a cleaning of, for example, components of the chain conveyor below a transporting plane on which products are transported can be performed.

In one embodiment, the lifting element is connected to the tensioning element by a rigid connector.

A rigid connector directly translates the movement of the tensioning element to the movement of the lifting element.

Particularly, the rigid connector may comprise a catch engaged with an intrusion of the lifting element.

It can further be provided that the tensioning element is configured to move the deflection roller in a direction parallel to the conveying direction of the chain conveyer so as to adjust a tension of the chain and/or that the lifting element is configured to rotate about an axis of rotation.

These embodiments increase the reliability of the lifting of the chain while, at the same time, reducing transversal stress to the chain.

It may further be provided that the tensioning element comprises a spindle and an actuation element for actuating the spindle, wherein the method comprises, upon actuation of the actuation element, moving the tensioning element via the spindle between the tensioned state and the cleaning state.

With this embodiment, also a humanly induced switching between the cleaning mode state and the tensioned state is realized.

In one embodiment, the chain conveyor comprises a plurality of lifting elements movably coupled with the tensioning element, wherein optionally the lifting elements are positioned equidistantly between the two deflection elements.

This embodiment ensures reliable lifting of all parts of the chain irrespective of where they are provided compared to the deflection rollers.

### Brief description of the drawings

- Figure 1: Shows a schematic depiction of a chain conveyor according to one embodiment
- Figures 2a + 2b: Show an embodiment of a chain conveyor and movement of the same from a tensioned state to a cleaning state
- Figure 3: Shows an embodiment of a tensioning element

### Detailed description

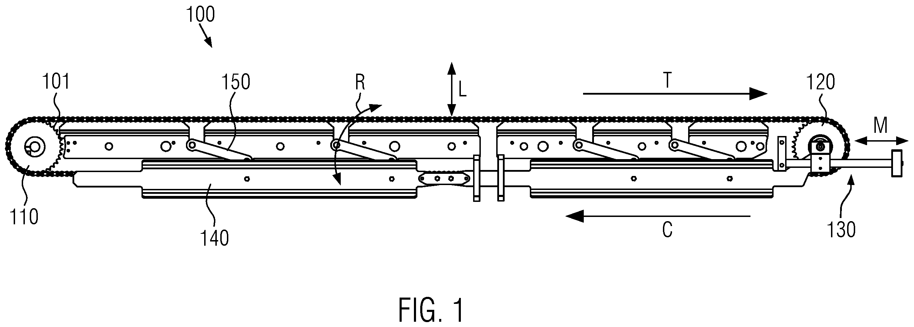

Figure 1 shows an embodiment of a chain conveyor 100 according to the present disclosure.

The chain conveyor 100 comprises a chain 101. This chain is arranged so as to extend between and around two deflection rollers 110 and 120 positioned at opposing ends of the chain 101, thereby forming a closed-loop of the chain, also known as an endless conveyor. These deflection rollers 110 and 120 realize that the chain is deflected once run along the transport direction T in a direction C that is reverse to the transport direction and, after the chain has moved from the deflection roller 120 to the deflection roller 110 along direction C, the chain is again deflected to move along the transport direction T.

In the shown realization, this means that the chain 101, above the position of the deflection rollers 110 and 120, runs along the direction T and, below the deflection rollers, runs along the direction C, thereby forming a closed loop.

The chain 101 may comprise a plurality of separate chain elements together forming the chain 101 and/or the chain may be realized by using, for example, a continuous belt made, for example, from a plastic material or a textile material. Also combinations thereof, for example a chain comprising a plurality of separately movable elements as depicted and a transport surface made from a plastic material and/or a textile material and connected to the separately movable elements can be thought of.

The chain conveyor shown in the figure 1 further comprises a guide 140 for guiding the chain between the deflection rollers 110 and 120. The guide 140 may be stationary. It can also be provided that at least a part of the guide 140 is connected in a movable manner with a tensioning element 130, as will be described below.

The chain conveyor 100 further comprises a tensioning element 130 that is connected at least with one of the deflected rollers 110 and 120. In the embodiment depicted in figure 1, there is provided one tensioning element 130 associated with and connected to the deflection roller 120. This is not to be construed as limiting to the present disclosure. The tensioning element may also be provided in association with the deflection roller 110 and/or two tensioning elements 130 could be provided that are each associated with one of the deflection rollers.

According to embodiments of the present disclosure, the tensioning element 130 is provided so as to move at least one of the deflection rollers 110 and 120. In the embodiment depicted in figure 1, the tensioning element 130 is connected to the deflection roller 120 and can preferably move the deflection roller 120 along the direction M indicated with the double arrow. This means that the tensioning element 130 can move the deflection roller 120 in a direction substantially towards the deflection roller 110 and a direction substantially away from the deflection roller 110.

Preferably, the direction M is completely or substantially within the plane defined by the chain and the directions T and C.

Depending on the direction in which the deflection roller 120 is moved, a tension caused by the deflection rollers 110 and 120 to the chain 101 changes. The smaller the distance between the deflection rollers 110 and 120, the smaller the tension caused by the deflection rollers to the chain 101 is. If the deflection rollers are spaced apart at a larger distance, by actuating the tensioning element 130, the tension applied by the deflection rollers to the chain is increased.

According to the embodiment shown in figure 1, the chain conveyor 100 further comprises at least one lifting element 150. While only one lifting element is denoted here explicitly, the chain conveyor may also comprise a plurality of lifting elements as at least schematically shown in figure 1.

Particularly, the lifting elements may be positioned at a distance relative to each other that is equidistant. This means that each lifting element is positioned at a distance from its immediately adjacent lifting elements where this distance is the same for all lifting elements. The distance of the lifting elements that are closest to the deflection roller 110 and the deflection roller 120 to the respective deflection roller 110 or 120, respectively, may be the same as the distance to an adjacent lifting element or this distance may be smaller or may be larger.

The distance at which the lifting elements are positioned spaced apart from each other (irrespective of whether they are spaced apart equidistantly or at irregular distances) may range from 10cm to 50cm or even 1m and all values in between. This may particularly depend on requirements regarding the tension that is to be applied to the chain and/or the lifting required for the chain 101.

According to embodiments of the present disclosure, the lifting elements 150, irrespective of how many there are and irrespective of where they are actually positioned with respect to each other and with respect to the deflection rollers 110 and 120, are movably coupled with the tensioning element 130. This means that a movement of the tensioning element and/or a movement of the deflection roller associated with the tensioning element 130 causes a movement of the lifting element.

In turn, as is shown by the arrow indicated with the reference R, the lifting element 150 is preferably arranged so as to move in a direction that it can come into physical contact with the chain 101 in case the distance of the deflection rollers 110 and 120 is reduced by actuating the tensioning element 130. The closer the deflection rollers 110 and 120 are positioned relative to each other, the more the lifting element 150 is moved in the direction of the chain 101 that extends, in the depiction of figure 1,above the lifting element 150 and above the deflection rollers 110 and 120. Thereby, the further upwards (in the depiction in figure 1) the lifting element 150 is moved, the more the chain 101 is lifted along the direction L and away from the guide 140.

With this, by reducing the tension in the chain 101 by moving the deflection rollers 110 and 120 closer to each other by actuating the tensioning element 130, the lifting element 150 causes a lifting of the chain 101 so as to move the chain from a tensioned state into a cleaning state where preferably also the lower surface of the upper part of the chain 101 (the lower surface being the surface that faces towards the guide 140) can be accessed for cleaning.

In some embodiments, it can be provided that the tension caused to the chain by lifting the chain 101 via the lifting element 150 is, with respect to its absolute value, the same as the reduction in tension caused to the chain 101 by moving the deflection rollers closer to each other.

As the length of the chain is constant irrespective of whether the deflection rollers apply a tension to the chain 101 or not, this may be realized by arranging the lifting element so that it can move over a distance in the direction of the chain (and at the same time move the chain) in the direction L that compensates for the reduction in the distance of the deflection points of the chain along the direction M when the deflection rollers 110 and 120 are moved closer to each other upon actuation of the tensioning element 130.

As a simple example, consider the chain 101 to be essentially arranged as a rectangle where the width W of the rectangle being given by the distance of the center points or rotational axis of the deflection rollers 110 and 120 and the height of the rectangle being given by the diameter D of the deflection rollers and potentially a lifting by an amount L caused by the lifting element 150.

The circumference U of the chain, corresponding to the length of the chain, is thus given by: U=2(W+D+L). This circumference U remains constant. The chosen notation may, for explanatory purposes, constitute the situation in the tensioned state, without this being limiting to the present disclosure.

If the distance of the deflection rollers 110 and 120 is reduced by an amount Δ by moving the tensioning element 113, the additionally available length of the chain 101 is 2x Δ because the additionally available width W' of the chain is not only the one that extends in the transport direction T but also the one that extends in the direction C.

In order to keep the tension to the chain constant, it is necessary that the U=2(W'+D+L'). As D (the diameter of the deflection rollers) is constant, only L' may change. In such a case, the newly obtained rectangle in the state where the deflection rollers are positioned closer to each other has the same circumference compared to the situation where the deflection rollers are spaced apart by a larger distance.

This results in U=2(W+D+L)=2(W'+D+L'). This results in W-W'=L'-L. Assuming that W', Wand L are known, the required lifting of the chain to a position L'=W-W'+L can be determined for states where the total tension applied to the chain remains constant. If a chosen L' is smaller than the thus calculated L', the tension applied to the chain in the cleaning state will be smaller than the tension applied to the chain in the tensioned state. This can have advantages in case in the cleaning state a movement of chain elements relative to each other is necessary. This may not be possible in a case where, in the cleaning state, the tension in the chain corresponds to the tension in the tensioned state.

The above considerations allow for obtaining the necessary displacement that has to be realized by the lifting elements and allows for constructing the connection between the tensioning element and/or the deflection rollers and the lifting element so as to realize a corresponding movement of the lifting element.

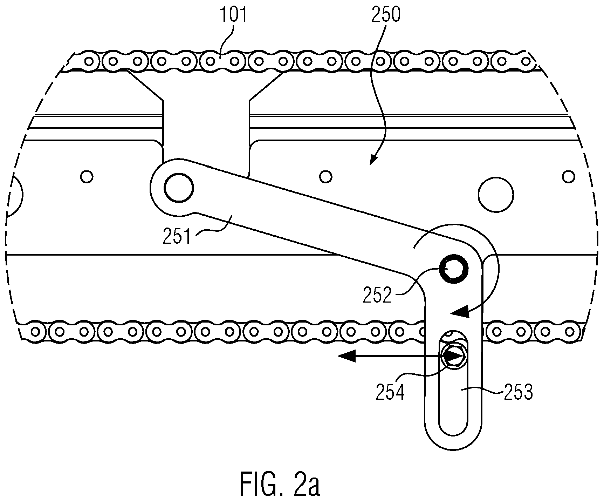

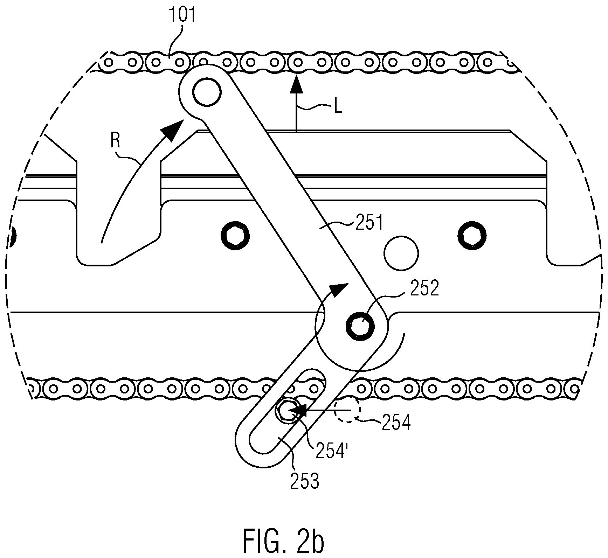

Figures 2a and 2b show embodiments of the lifting element 250 and illustrate the movement of the lifting element when the deflection rollers are moved closer to each other by actuating the tensioning element (not shown in figures 2a and 2b). This process is shown by the transition of the position of the lifting element from figure 2a to figure 2b.

Referring now to figure 2a, one of the lifting elements 150 shown in figure 1 is shown in more detail here as lifting element 250.

In the embodiment depicted here, the lifting element 150 may be considered to encompass a lifting element body 251. The lifting element body may be arranged on an axis 250 around which it can be rotated when the tensioning element and/or the deflection roller is moved. This can be realized by providing the lifting element body 251 with free ends that are rotatably arranged on the axis 252. The axis 252 may be a stationary part of the guide 140 described in relation to figure 1.

Moreover, the lifting element 250 may encompass an intrusion 253. This intrusion may be realized as a straight "long hole". It can also encompass a curved hole or any other suitable arrangement as long as this intrusion can engage with a catch 254. The catch 254 is preferably connected with the tensioning element and/or the deflection roller so that a movement of the tensioning element directly causes the catch 254 to move.

Due to the arrangement depicted here, a movement of the catch 254 will cause the lifting element body 251 to start rotating about the rotational axis 252 because the catch 254 moves in the direction of the double arrow, which causes it to move within the intrusion 253. This, in turn, causes the lifting element body to move around the axis 252.

This situation is depicted in figure 2b where the catch 254 was moved from the position in figure 2a to the position 254' in figure 2b. Due to the constrained movability of the lifting element 250 (the lifting element body 251 is only allowed to rotate about the axis 252) and the movement of the catch 254 inside the intrusion 253, the lifting element body 251 is moved so that the opposite end of the lifting element body 251 gets into contact with the chain 101 and lifts the chain in the direction L.

If the catch 254 is moved in the reverse direction, this results in a reverse rotation of the lifting element so that it moves, compared to the direction L, in the opposite direction, thereby causing the chain to sink.

The embodiment shown in figures 2a and 2b encompasses and describes a lifting element that is connected to the tensioning element by a rigid connector in the form of the catch 254 that may be part of or rigidly connected to the guide or a part of the guide that can be moved together with the tensioning element described in relation to figure 1. Alternatively, the catch 254 may be rigidly connected by any other suitable means to the tensioning element. The intrusion 253 and the catch 254 intersct with each other so as to cause a rotation of the lifting element when the tensioning element is moved. This realization is, however, not mandatory.

It can also be provided according to some embodiments that the lifting element is only moved in a direction towards the chain or a direction away from the chain so as to realize the lifting and sinking of the chain, without the lifting element being rotated, i.e. solely by translational movement. This can be done, for example, by using a catch as well but providing the lifting element with a lifting body and an intrusion that is inclined relative to the movement direction of the catch when the tensioning element is moved. The lifting element can then be restricted in its movement by using a stop that prevents movement transverse to the direction L depicted in figure 2b but only allows the lifting element to move in parallel to the direction L.

Also other realizations can be thought of where a movement of the tensioning element and/or the deflection roller is translated into a movement of the lifting elements.

Particularly, it can be provided that a part of the guide described already in relation to figure 1 is connected to the tensioning element so as to realize a movement of the lifting element.

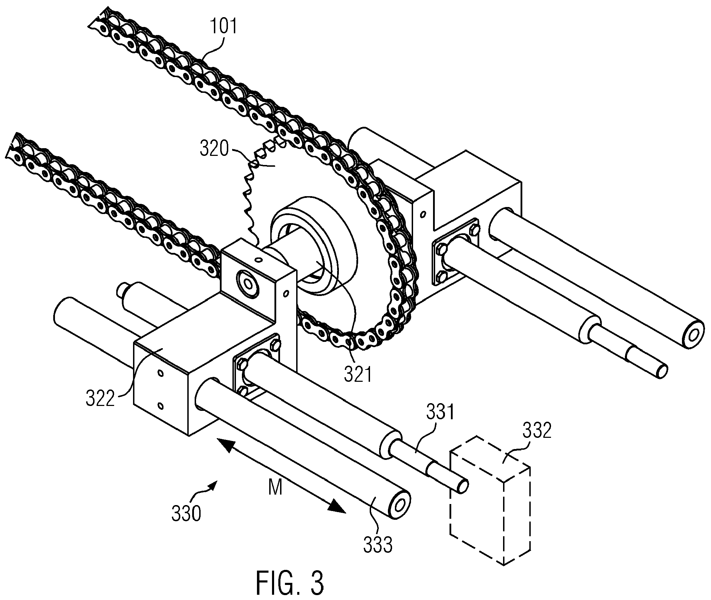

Figure 3 shows an embodiment of the tensioning element 330 in more detail compared to figure 1. The tensioning element 330 is depicted here as comprising a spindle 331 that is fixedly arranged with respect to a holder 322 that holds an axis 321 on which the deflection roller 320 is positioned. This realization can be preferred in some embodiments as it provides a reliable connection of the deflection roller 320 and the tensioning element 330 while at the same time not restricting the deflection roller in its movement.

Additionally, the tensioning element 330 may comprise a guide element 333 on which the holder 322 slidingly rests and can be moved at least along the direction M.

It can further be provided that the tensioning element 330 comprises an actuating element 332 that is connected with the spindle 331. Upon actuating the actuating element 332, the spindle can be moved so as to move the holder 322, thereby moving in turn the deflection roller 320 along the direction M.

The actuating element 332 can, for example, comprise a motor like a servomotor that is connected to a (not further shown) control device like the control device (for example realized as a computer) that controls the chain conveyor. This control device can encompass a user interface via which the user can provide an input that indicates that a switching of the chain conveyor between the tensioned state and the cleaning state is to be performed. Upon such an input, the control unit can control the motor so as to move the spindle, thereby causing a movement of the deflection roller either towards the other (not shown) deflection roller so as to reduce the tension of the chain and cause the lifting elements to lift the chain and thereby move the chain into the cleaning state, or to move the deflection roller 320 away from the other deflection roller, thereby moving the chain from the cleaning state to the tensioned state.

Additionally or alternatively, the actuating element 332 can also be realized as a manually actuatable element like for example a handwheel or a lever or the like.

## Claims

1. A chain conveyor (100) comprising a chain (101) arranged as endless conveyor on two deflection rollers (110, 120) and a guide (140) for guiding the chain between the deflection rollers, wherein the chain conveyor (100) further comprises a tensioning element (130) for tensioning the chain (101), wherein the tensioning element (130) is configured to move one of the two deflection rollers (110, 120) to thereby tension the chain (101), wherein the chain conveyor (100) further comprises a lifting element (150) for lifting the chain (101) from the guide (140), wherein the lifting element (150) is movably coupled with the tensioning element (130) so that the lifting element can lift the chain (101) when the tensioning element is moved so as to reduce the tension of the chain.

2. The chain conveyor (100) according to claim 1, wherein the tensioning element (130) is configured to move the deflection roller (110, 120) between a tensioned state of the chain (101) and a cleaning state of the chain, wherein, in the cleaning state, the distance of the chain (101) to the guide (140) is larger than in the tensioned state.

3. The chain conveyor (100) according to claim 1 or 2, wherein the lifting element (150) is connected to the tensioning element (130) by a rigid connector (254).

4. The chain conveyor (100) according to claim 3, wherein the rigid connector comprises a catch (254) engaged with an intrusion (253) of the lifting element (250).

5. The chain conveyor (100) according to any of claims 1 to 4, wherein the tensioning element (130) is configured to move the deflection roller (110, 120) in a direction parallel to the conveying direction (T) of the chain conveyer (100) so as to adjust a tension of the chain (101) and/or wherein the lifting element (150) is configured to rotate about an axis of rotation (252).

6. The chain conveyor (100) according to any of claims 1 to 5, wherein the tensioning element (330) comprises a spindle (331) and an actuation element (332) for actuating the spindle.

7. The chain conveyor (100) according to any of claims 1 to 6, wherein the chain conveyor (100) comprises a plurality of lifting elements (150) movably coupled with the tensioning element (130).

8. The chain conveyor (100) according to claim 7, wherein the lifting elements (150) are positioned equidistantly between the two deflection rollers (110, 120).

9. A method for switching a chain (101) of a chain conveyor (100) between a tensioned state and a cleaning state, wherein the chain conveyor (100) comprises the chain (101) arranged as endless conveyor on two deflection rollers (110, 120) and a guide (140) for guiding the chain between the deflection rollers, wherein the chain conveyor (100) further comprises a tensioning element (130) for tensioning the chain (101), wherein the tensioning element (130) is configured to move one of the two deflection rollers (110, 120) to thereby tension the chain (101), wherein the chain conveyor (100) further comprises a lifting element (150) for lifting the chain (101) from the guide (140), wherein the lifting element (150) is movably coupled with the tensioning element (130) so that the lifting element lifts the chain (101) when the tensioning element is moved so as to reduce the tension of the chain, the method comprising actuating the tensioning element (130) to move the deflection roller (110, 120) between a tensioned state of the chain (101) and a cleaning state of the chain.

10. The method according to claim 9, wherein, in the cleaning state, the distance of the chain (101) to the guide (140) is larger than in the tensioned state.

11. The method according to claim 9 or 10, wherein the lifting element (150) is connected to the tensioning element (130) by a rigid connector (254).

12. The method according to claim 11, wherein the rigid connector comprises a catch (254) engaged with an intrusion (253) of the lifting element (250).

13. The method according to any of claims 9 to 12, wherein the tensioning element (130) is configured to move the deflection roller (110, 120) in a direction parallel to the conveying direction (T) of the chain conveyer (100) so as to adjust a tension of the chain (101) and/or wherein the lifting element (150) is configured to rotate about an axis of rotation (252).

14. The method according to any of claims 9 to 13, wherein the tensioning element (330) comprises a spindle (331) and an actuation element (332) for actuating the spindle, wherein the method comprises, upon actuation of the actuation element (332), moving the tensioning element (330) via the spindle between the tensioned state and the cleaning state.

15. The method according to any of claims 9 to 14, wherein the chain conveyor (100) comprises a plurality of lifting elements (150) movably coupled with the tensioning element (130), wherein optionally the lifting elements are positioned equidistantly between the two deflection elements (110, 120).
